# EUROPEAN PATENT SPECIFICATION

(11) **EP 3 872 648 B1**
(45) Date of publication and mention of the grant of the patent: **28.01.2026**
(21) Application number: 20192715.9
(22) Date of filing: 25.08.2020
(51) Int. Cl.: G06F 16/353, G06N 5/04

(54) **METHOD AND APPARATUS FOR CLASSIFICATION PREDICTION, AND STORAGE MEDIUM**
VERFAHREN UND VORRICHTUNG ZUR KLASSIFIKATIONSVORHERSAGE UND SPEICHERMEDIUM
PROCÉDÉ ET APPAREIL DE PRÉDICTION DE CLASSIFICATION ET SUPPORT D'ENREGISTREMENT

(30) Priority: 25.02.2020 CN 202010117294
(43) Date of publication of application: 01.09.2021
(73) Proprietor: Beijing Xiaomi Pinecone Electronics Co., Ltd., Beijing 100085 (CN)
(72) Inventor: QI, Baoyuan, Beijing, 100085 (CN); HAN, Jiacheng, Beijing, 100085 (CN); MENG, Erli, Beijing, 100085 (CN)
(74) Representative: Dehns Germany Partnerschaft mbB

(56) References cited:
- WO-A1-2016/004075
- CN-A- 110 825 381
- US-A1- 2017 090 980

## Description

### TECHNICAL FIELD

The present disclosure relates to the field of deep learning, and more particularly, to a classification prediction method and apparatus, and to a storage medium.

### BACKGROUND

A classification task is a common task in natural language processing, such as positive and negative sentiment analysis and news text classification. In the field of deep learning, a model trained with data has a variety of prediction manners when predicting a classification task.

Due to differences of each trained model on the input, processing process and output during a prediction stage, a model service has different matching requirements with regard to different resource types, concurrent changes and other operation environments in use. In the relevant art, for different prediction model services, a prediction method may be written for a corresponding prediction model and programming may be made for an application scenario. Such a manner lacks a uniform specification, has low flexibility as well as poor adaptability for a new scenario, and requires a model deployer to perform a very complicated operation. US 2017/090980 discloses computer-implemented methods for an evolving parallel system to automatically improve the performance of multiple concurrent tasks on large datasets. WO 2016/004075 discloses interactive interfaces for machine learning model evaluations. CN 110825381 discloses a CNN-based bug positioning method combining source code semantics and grammatical features.

### SUMMARY

In order to address the problems in the relevant art, the present disclosure provides a method and apparatus for classification prediction, and a storage medium.

According to a first aspect of the invention, a method for classification prediction is provided as defined by claim 1.

In another implementation manner, the method may further include:
acquiring a result of the batch prediction; and
determining, from the result of the batch prediction, the prediction result respectively corresponding to at least one identifier.

In still another implementation manner, the operation of performing the classification prediction task based on the service branch may include:
performing, in response to the service branch being idle, the classification prediction task based on the service branch.

In still another implementation manner, the method may further include:
reading a configuration file and starting the classification prediction service,
wherein the configuration file comprises a prediction framework for performing batch prediction on the classification prediction task, and
wherein the prediction framework at least comprises: a definition of a universal classification prediction interface, and definitions of self-defined classification prediction interfaces respectively corresponding to the models supported by the classification prediction service.

In still another implementation manner, the method may include:
initializing a universal variable of at least one of the models through the universal classification prediction interface, and performing corresponding startup setting; and initializing a universal batch classification prediction method and a batch task generation method;
initializing a self-defined variable of the at least one model through the self-defined classification prediction interfaces respectively corresponding to the models;
instantiating the at least one model, and starting a branch service for the at least one model; and
generating a model dictionary according to branch identifiers of branch services respectively corresponding to the models, the model dictionary representing a corresponding relationship between branch identifiers and corresponding model invoking interfaces.

In still another implementation manner, the operation of generating the model dictionary according to the branch identifiers of the branch services respectively corresponding to the models may include:
determining the branch identifiers of the branch services respectively corresponding to the models as primary keys;
based on a definition of the at least one model, determining invoking interfaces for the modes through a dynamic loading mechanism after the models are instantiated; and
storing the primary keys and the invoking interfaces as the model dictionary to a model prediction key value pair.

According to a second aspect of the invention, an apparatus for classification prediction is provided as defined by claim 7.

According to a further aspect of the invention, a non-temporary computer readable storage medium is provided as defined by claim 8.

The technical solutions provided by the embodiments of the present disclosure may include the following beneficial effects. When a classification task is predicted, a service branch corresponding to a classification prediction task can be determined from a started classification prediction service according to branch identifiers carried by the classification prediction task, such that services having different requirements can be integrated for the classification prediction task, and a uniform service entry can be provided, thereby improving the processing efficiency of the prediction of the classification task.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flowchart illustrating a method for classification prediction according to an exemplary embodiment.
FIG. 2 is a flowchart illustrating a method for converting single prediction into batch prediction according to an exemplary embodiment of the present disclosure.
FIG. 3 is a flowchart of reading a configuration file and starting a classification prediction service according to an exemplary embodiment.
FIG. 4 is a flowchart illustrating a method for generating a model dictionary according to branch identifiers of branch services respectively corresponding to models according to an exemplary embodiment.
FIG. 5 is a flowchart illustrating a method for performing batch prediction on a plurality of prediction objects to be classified through a service branch according to an exemplary embodiment.
FIG. 6 is a flowchart illustrating a method for setting a prediction framework according to an exemplary embodiment.
FIG. 7 is a schematic diagram illustrating initialization of a variable according to an exemplary embodiment.
FIG. 8 is a schematic diagram illustrating encapsulation of a configuration file according to an exemplary embodiment.
FIG. 9 is a schematic diagram illustrating a user request according to an exemplary embodiment.
FIG. 10 is a schematic diagram illustrating a classification prediction result according to an exemplary embodiment.
FIG. 11 is a block diagram illustrating a classification prediction apparatus according to an exemplary embodiment.
FIG. 12 is a block diagram illustrating an apparatus according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects of the invention as defined by the appended claims.

The terminology used in the present disclosure is for the purpose of describing particular embodiments only and is not intended to limit the present disclosure. As used in the present disclosure and the appended claims, the singular forms "a," "an," and "the" are intended to include the plural forms as well, unless the context clearly indicates otherwise. It shall also be understood that the term "and/or" used herein is intended to signify and include any or all possible combinations of one or more of the associated listed items.

It shall be understood that, although the terms "first," "second," "third," etc. may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if" may be understood to mean "when" or "upon" or "in response to a judgment" depending on the context.

An embodiment of the present disclosure provides a method for classification prediction, which provides a uniform service entry for service branches of classification prediction tasks having different requirements to improve the processing efficiency of the prediction on a classification task. The embodiments of the present disclosure aim to provide a classification prediction method that improves on classification predictive modeling and machine learning. More specifically, the embodiments aim to improve on classification predictive modeling by predicting a classification task to classify, for example, text content.

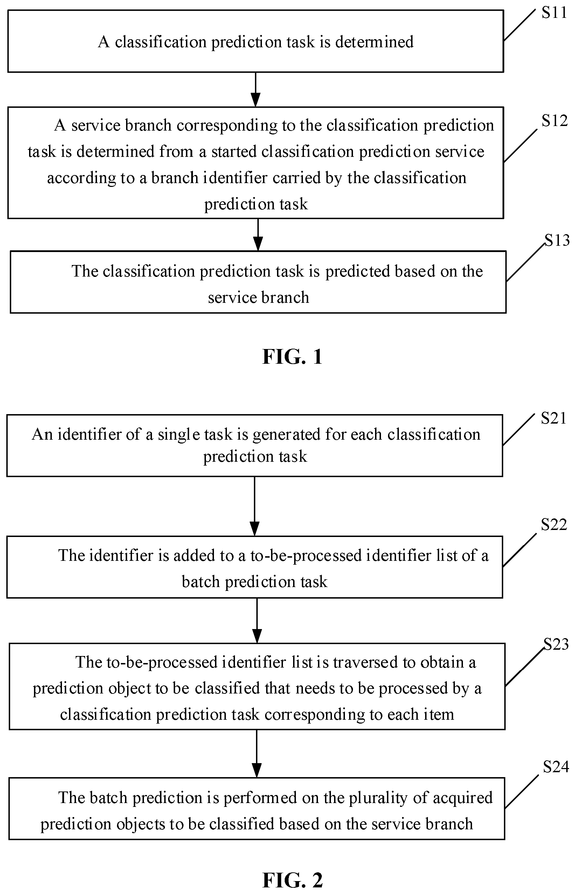

FIG. 1 illustrates a method for classification prediction according to an exemplary embodiment. As shown in FIG. 1, the method for classification prediction may include the following operation S11 to operation S13.

In S11, a classification prediction task is determined. The classification prediction task, for example, may be a classification prediction request and it may be obtained. The classification prediction request, for example, may be used to process a single prediction object that is to be classified. The single prediction object, for example, may include text content.

In one or more embodiments of the present disclosure, the classification prediction task may be a batch prediction task or may also be a single prediction task. The batch prediction task represents that the classification prediction task includes a plurality of prediction objects to be classified. The single prediction task represents that the classification prediction task includes a single prediction object to be classified.

In S12, a service branch corresponding to the classification prediction task is determined from a started classification prediction service according to a branch identifier carried by the classification prediction task. The service branch, for example, may be a branch used by a classification prediction task to classify text content. The started classification prediction service, for example, may include service branches.

The branch identifier is configured to identify a service branch. The branch identifier may be an identifier of a prediction model used by the classification prediction task, an instance identifier, an algorithm identifier, etc.

In the embodiments of the present disclosure, the classification prediction task may be provided with a uniform classification prediction service entry, the branch identifier is carried in the classification prediction task, therefore, the service branch corresponding to the classification prediction task can be determined from the started classification prediction task based on the branch identifier. Optionally, an identifier of a service branch can be agreed in advance for the classification prediction task and the classification prediction service, such that the classification prediction task can determine the branch identifier of the service branch that needs to be used.

In S 13, a classification prediction task is predicted based on the service branch. For example, the classification prediction task is performed based on the service branch.

According to the embodiments of the present disclosure, when a classification task is predicted, a service branch corresponding to the classification prediction task may be determined from a started classification prediction service according to a branch identifier carried by the classification prediction task, such that services having different requirements can be integrated for the classification prediction tasks, and a uniform service entry can be provided, thereby improving the processing efficiency of the prediction of the classification task.

In the embodiments of the present disclosure, the implementation process of the method for classification prediction involved in the embodiments of the present disclosure will be described below in combination with actual applications.

In the embodiments of the present disclosure, batch prediction may be performed on prediction objects to be classified in the classification prediction task.

When the classification prediction task includes a plurality of prediction objects to be classified, batch prediction may be performed on the plurality of prediction objects to be classified based on the service branch corresponding to the classification prediction task. When the classification prediction task includes a single prediction object to be classified, the single prediction object to be classified may be predicted through a corresponding service branch. In order to improve the efficiency, the single prediction object to be classified may also be converted into a plurality of prediction objects to be classified for batch prediction.

In an implementation manner, when the classification prediction task is a single prediction task, in order to implement the single prediction task, the single prediction task needs to be converted into a batch prediction task before the batch prediction is performed on the classification prediction task through the classification prediction service in the embodiments of the present disclosure.

In order to improve a prediction speed and support a high concurrent capacity, characteristics of Graphics Processing Unit (GPU) batch prediction are fully utilized in the embodiments of the present disclosure to automatically convert the single prediction task into the batch prediction task.

FIG. 2 is a flowchart illustrating a method for converting single task prediction into batch prediction according to an exemplary embodiment of the present disclosure. Referring to FIG. 2, the method may include the following operations.

In S21, an identifier of a single task is generated for each classification prediction task.

In the embodiments of the present disclosure, a unique input identifier may be generated for each classification prediction task, which is represented by uuid, for example. The identifier may be implemented by a programming tool, for example, implemented by invoking a uuid.uuid4() function in python.

In S22, the identifier is added to a to-be-processed identifier list of a batch prediction task.

For example, the uuid may be added to the to-be-processed input list id_list.

In S23, the to-be-processed identifier list is traversed to obtain a prediction object to be classified that needs to be processed by a classification prediction task corresponding to each item.

In the embodiments of the present disclosure, the content of the id_list may be acquired by traversing. For example, the content to be processed in each id_list may be acquired. Upon the acquisition of the content to be processed, the determined classification prediction service can be invoked, and the batch prediction can be performed on the classification prediction service in the to-be-processed input identifier list.

In an implementation manner of the embodiments of the present disclosure, the to-be-processed input identifier list may be locked by a global variable lock and then a universal batch prediction interface may be invoked for the batch prediction.

In S24, the batch prediction is performed on the plurality of acquired prediction objects to be classified based on the service branch.

In the embodiments of the present disclosure, based on the method for converting the single task prediction into the batch prediction, a high concurrent processing capacity may be implemented.

In the embodiments of the present disclosure, the batch prediction service has a bearable processing capacity. For the above batch prediction process, when the processing capacity of one batch prediction service is not met, task loads of a plurality of classification prediction tasks with a same branch identifier may be acquired, until no classification prediction task with a same branch identifier exists (i.e., when the total capacity of the classification prediction tasks corresponding to the present same service branch does not reach the maximum processing capacity of the service branch, these classification prediction tasks may be subjected to batch processing at the same time in one service), or, until a task load of the one batch prediction service is met (i.e., when the total capacity of the classification prediction tasks corresponding to the present same service branch exceeds the maximum processing capacity of the service branch, a part of these classification prediction tasks may be processed in batch in a service according to the processing capacity of the service), so as to conveniently perform the batch prediction through the same service branch.

Each prediction object to be classified may be provided with a identifier, and the identifier represents a classification prediction task to which a corresponding prediction object to be classified belongs and differentiate the corresponding prediction object to be classified from other prediction objects to be classified in the classification prediction task. When a plurality of classification prediction tasks are processed in batch and each classification prediction task in the classification prediction tasks includes a plurality of classification prediction objects, not only the classification prediction task to which the classification prediction object belongs can be identified, but also the classification prediction object in the classification prediction task can be identified. When the classification prediction task in the plurality of classification prediction tasks includes a single prediction task, only the classification prediction task to which the object belongs can be identified.

When a plurality of prediction objects to be classified are predicted based on the service branch, a plurality of prediction objects to be classified that respectively need to be processed by a plurality of same-type classification prediction tasks may be acquired; and the batch prediction may be performed on the plurality of acquired prediction objects to be classified based on the service branch.

In an implementation manner of the embodiments of the present disclosure, upon the completion of the batch prediction, a result of the batch prediction may be acquired, and a prediction result respectively corresponding to each input identifier may be determined based on the result of the batch prediction.

In an example, the result of the batch prediction may be acquired for the single prediction task, and each prediction result and the input identifier in the result of the batch prediction may be stored to a global prediction result correspondingly. In the embodiments of the present disclosure, by correspondingly storing the prediction result and the input identifier to the global prediction result, the prediction result may be found according to the uuid in the global prediction result respond_dict and returned to users respectively corresponding to different classification prediction tasks.

In an example, in a case that the to-be-processed input identifier list is locked by the global variable lock when batch prediction is performed on a single prediction task and then the universal batch prediction interface is invoked for the batch prediction, the to-be-processed input identifier list may be unlocked upon the completion of the batch prediction. For example, the global variable lock is unlocked.

The implementation process for performing the batch prediction on the plurality of acquired prediction objects to be classified based on the service branch is described below in the embodiment of the present disclosure.

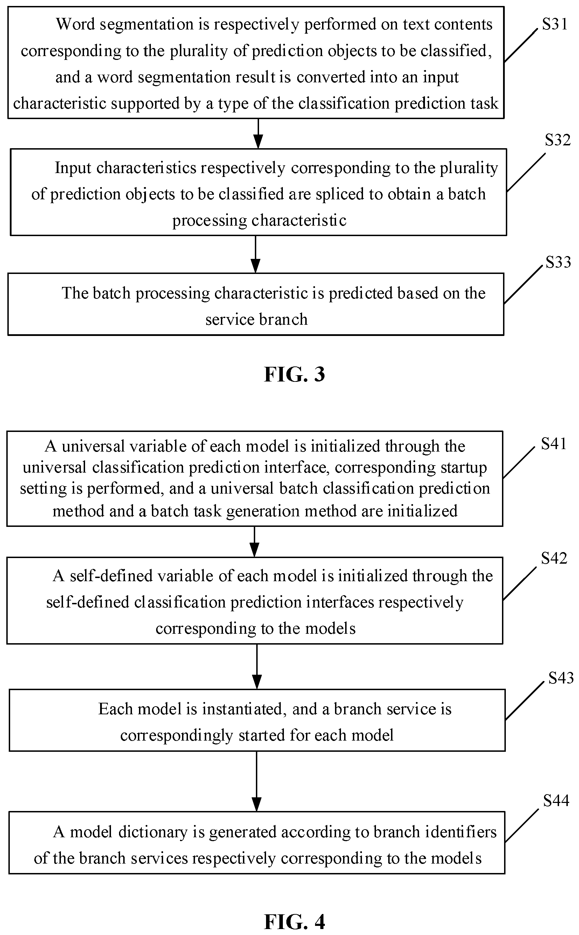

FIG. 3 is a flowchart illustrating a method for performing batch prediction on a plurality of prediction objects to be classified through a service branch according to an exemplary embodiment. As shown in FIG. 3, the method may include the following operations.

In S31, word segmentation is respectively performed on text contents corresponding to the plurality of prediction objects to be classified, and a word segmentation result is converted into an input characteristic supported by a type of the classification prediction task.

In the embodiments of the present disclosure, an input text may be segmented to convert the input. The common manner typically includes using a word segmentation tool or using single character enumeration, which may be selected according to an actual need. The word segmentation result may be converted to characteristics acceptable to the model. The common model input typically is an index position of a segmented word in a word list, and thus needs to be converted according to the dictionary.

In S32, input characteristics respectively corresponding to the plurality of prediction objects to be classified are spliced to obtain a batch processing characteristic.

When a plurality of classification prediction tasks are provided, the word segmentation can be respectively performed on the text contents corresponding to the plurality of classification prediction tasks, and the word segmentation result can be converted into the input characteristics supported by the model corresponding to the type of the classification prediction task. The input characteristics respectively corresponding to the plurality of prediction objects to be classified can be spliced to obtain the batch processing characteristic.

In S33, the batch processing characteristic is predicted based on the service branch.

In the embodiments of the present disclosure, when the classification task is predicted, the batch prediction may be performed on the single prediction task and the batch prediction task through the classification prediction service, such that the concurrent capacity can be improved.

In an implementation manner, the classification prediction service may include a plurality of different service branches. In order to make the concurrent processing capacities of the different service branches reach a more optimal state, an idle service branch may be adopted to predict a classification prediction task. That is, the classification prediction service provided by the embodiments of the present disclosure has the capacity of enabling a plurality of service branches to process the classification prediction task concurrently. When one service branch provides a service for a corresponding classification prediction task, other service branches are not affected to receive their own classification prediction tasks and provide services. Accordingly, when one service branch is idle, no matter whether other service branches are in an idle state or in a state of providing a service, the idle service branch can provide a service for its own classification prediction task. In other words, in the embodiments of the present disclosure, in response to the service branch being idle, the classification prediction task may be predicted through the idle service branch.

In the embodiments of the present disclosure, before the batch prediction is performed on the classification prediction task, the classification prediction service may be started to read a corresponding configuration file, so as to initialize the classification prediction task that needs for the batch prediction. The configuration file may include a prediction framework for performing the batch prediction on the classification prediction task. The prediction framework may at least include a definition of a universal classification prediction interface and definitions of self-defined classification prediction interfaces respectively corresponding to models supported by the classification prediction service.

FIG. 4 is a flowchart of reading a configuration file and starting a classification prediction service according to an exemplary embodiment. Referring to FIG. 4, the flowchart may include the following operations.

In S41, a universal variable of each model is initialized through the universal classification prediction interface, corresponding startup setting is performed, and a universal batch classification prediction method and a batch task generation method are initialized.

In S42, a self-defined variable of each model is initialized through the self-defined classification prediction interfaces respectively corresponding to the models.

In S43, each model is instantiated, and a branch service is correspondingly started for each model.

In S44, a model dictionary is generated according to branch identifiers of the branch services respectively corresponding to the models. The model dictionary represents a corresponding relationship between branch identifiers and corresponding model invoking interfaces.

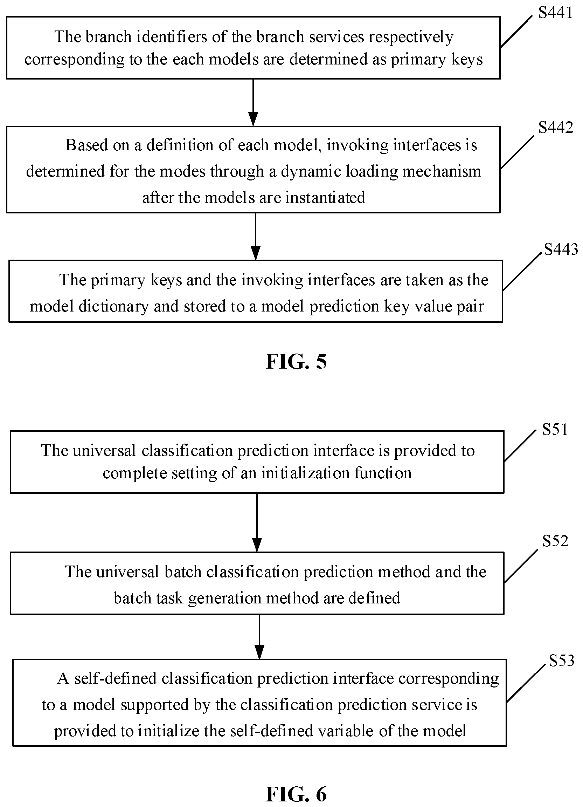

Generating the model dictionary according to the branch identifiers of the branch services respectively corresponding to the models may be implemented in the manner shown in FIG. 5. Referring to FIG. 5, the manner may include the following operations.

In S441, the branch identifiers of the branch services respectively corresponding to the each models are determined as primary keys.

The branch identifier may be an instantiated name, a model name, etc. The branch identifier serves as a basis to define a model and search for a branch service.

In the embodiments of the present disclosure, a prediction-related definition method may be obtained from a model prediction key value pair according to the instantiated name. An actual prediction method, such as the method for converting the single task prediction into the batch prediction or the batch prediction method, may be invoked according to an actual demand.

In S442, based on a definition of each model, invoking interfaces is determined for the modes through a dynamic loading mechanism after the models are instantiated.

The dynamic loading mechanism is a mechanism provided by the Python and capable of automatically acquiring a classification name according to the model name. The corresponding type name may be obtained through the model name. By instantiating the type, the invoking interface may be obtained. The address corresponding to the interface may serve as a value.

In S443, the primary keys and the invoking interfaces are taken as the model dictionary and stored to a model prediction key value pair.

The primary keys and the values may serve as the model dictionary and may be stored to the model prediction key value pair, so as to be invoked by a user to find a corresponding prediction model.

In the embodiments of the present disclosure, the method for defining a type used by a model may be determined using the model prediction key value pair, and serves as a function body of a universal batch prediction method.

In the embodiments of the present disclosure, the process for forming the configuration file involved in the started classification prediction service is described below.

First of all, a prediction framework of a model capable of implementing uniform batch prediction on each classification prediction task is described in the embodiments of the present disclosure.

In the embodiments of the present disclosure, a prediction framework of a model may include a definition of a universal classification prediction interface and definitions of self-defined classification prediction interfaces respectively corresponding to models supported by the classification prediction service. The universal classification prediction interface is configured to initialize the universal variable of each model, perform the corresponding startup setting, and initialize the universal batch classification prediction method and the batch task generation method. The universal batch classification prediction method is configured to execute universal operation in the classification prediction, for example, convert a to-be-predicted object in a text form into an input variable supported by a corresponding model. As models correspond to a different prediction method, the prediction method of each model may be correspondingly determined by the self-defined classification prediction interface respectively corresponding to each model. The batch task generation method is configured to convert a single prediction object to be classified into a plurality of prediction objects to be classified for batch prediction, or determine, according to the processing capacity of the batch prediction service, prediction objects for batch processing in one service. The self-defined classification prediction interface corresponding to a model supported by the classification prediction service is configured to initialize the self-defined variable of the model.

FIG. 6 is a flowchart illustrating a method for setting a prediction framework according to an exemplary embodiment. The method for setting a prediction framework shown in FIG. 6 may include the following operations.

In S51, the universal classification prediction interface is provided to complete setting of an initialization function. The initialization function is configured to complete value assignment of a universal variable and startup setting of a universal function.

In the embodiments of the present disclosure, the universal variable of the initialization function may include a batch prediction size, a file mapping from a tag id to a tag character string, etc.

The universal function in the embodiments of the present disclosure may include a function of converting a tag id to a tag character string, a global variable lock initialization function, a to-be-processed input identifier list id_list initialization function, a global prediction result respond_dict initialization function, etc.

In S52, the universal batch classification prediction method and the batch task generation method are defined.

The input of the universal batch classification prediction method is a batch input text list. During initialization, the function body is null (the function body is subsequently set according to an implementation method respectively corresponding to each model).

In the embodiments of the present disclosure, the universal batch classification prediction method may be understood as a universal batch prediction method function predict_batch, and is configured to process some different types of universal processing operations, for example, convert the to-be-predicted object in the text form into the input variable supported by a model. The input of the method function is a batch input text list with null content in the function body, such that when the prediction method of the actual model is written, the prediction method can be adaptively rewritten according to the model.

The batch task generation method may be understood as being configured to convert a single prediction object to be classified into a plurality of prediction objects to be classified for batch prediction, or determine prediction objects for batch processing in one service according to the processing capacity of the batch prediction service.

In S53, a self-defined classification prediction interface corresponding to a model supported by the classification prediction service is provided to initialize the self-defined variable of the model.

In the embodiments of the present disclosure, by providing a self-defined classification prediction interface corresponding to a model supported by a classification prediction service, a self-defined variable of a to-be-predicted classification prediction task can be defined and initialized, thereby improving the flexibility of the prediction on the classification task.

By applying the prediction framework involved in the embodiments of the present disclosure, when a classification task is predicted, a universal classification prediction interface may be invoked to initialize a universal variable of the classification prediction task. A self-defined classification prediction interface corresponding to a model supported by a classification prediction service may further be invoked to initialize a self-defined variable of the classification prediction task. Furthermore, other universal classification prediction interfaces may further be invoked to set a batch prediction service of the classification task in the embodiments of the present disclosure.

In the embodiments of the present disclosure, for an actual classification prediction task, a self-defined classification prediction interface corresponding to a model supported by a classification prediction service is inherited from a universal classification prediction interface to initialize a universal variable of the classification prediction task. For example, as shown in FIG. 4, the self-defined type PytextPredictor is inherited from an advanced type BasePredictor; and during initialization, the initialization function of the BasePredictor is first invoked, and parameters of the batch prediction size batch_size and the mapping file map_json_file from the tag id to the tag character string are transmitted.

After the universal variable of the classification prediction task is initialized, the self-defined classification prediction interface corresponding to the model supported by the classification prediction service may be invoked to initialize the self-defined variable of the classification prediction task.

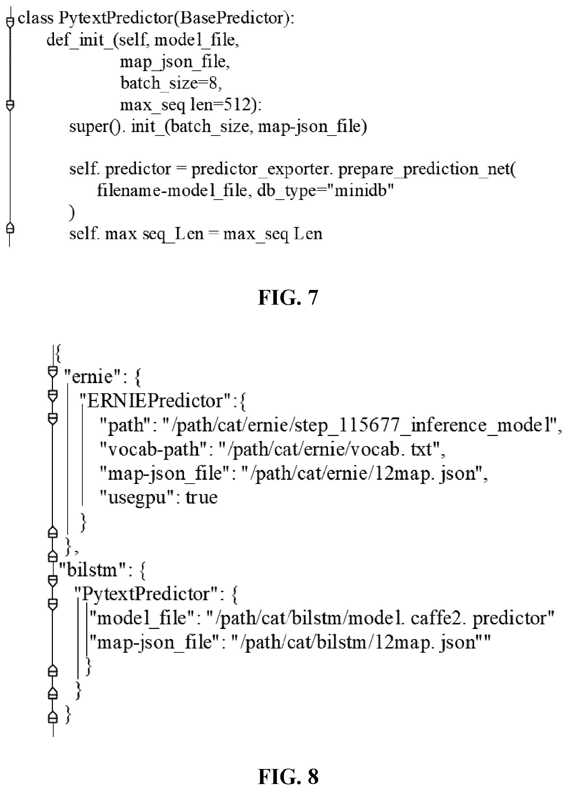

In the embodiments of the present disclosure, an actual classification prediction task may be self-defined according to an intrinsically required variable. For example, as shown in FIG. 7, the self-defined type PytextPredictor may further be initialized for self-defined variables "predictor" and "max_seq_len".

In an implementation manner of the embodiments of the present disclosure, a prediction framework of a pre-defined model for performing batch prediction on a classification prediction task may be encapsulated into a configuration file. When the classification prediction service is started, the configuration file can be read to a memory, and the classification prediction service can be initialized through the configuration file.

In the embodiments of the present disclosure, a format and content of the configuration file may be defined. The configuration file may be a json format or a yaml format. The main content of the configuration file may include a model name, a self-defined parameter variable of the model, etc.

FIG. 8 is an embodiment according to the above description. Two branch services, "ernie" and "bilstm", are defined in FIG. 8. Generally, with the "ernie" as the example, the type of an invoked model is defined as "ERNIEPredictor"; and self-defined parameters corresponding to the type include "path", "vocab_path", "map_json_file" and "use_gpu", all of which are the self-defined parameter required by the prediction of the model. Another invoking model "PytextPredictor" is defined by the "bilstm". Comparing with the example defined by the "bilstm", it can be found that the self-defined parameters of the two different models are not completely the same, i.e., each model can be flexibly defined in configuration according to a corresponding parameter.

In the embodiments of the present disclosure, a classification prediction service may be started; and upon the initialization of each branch service, a prediction request of a user for a classification task may be responded, and the batch prediction may be performed.

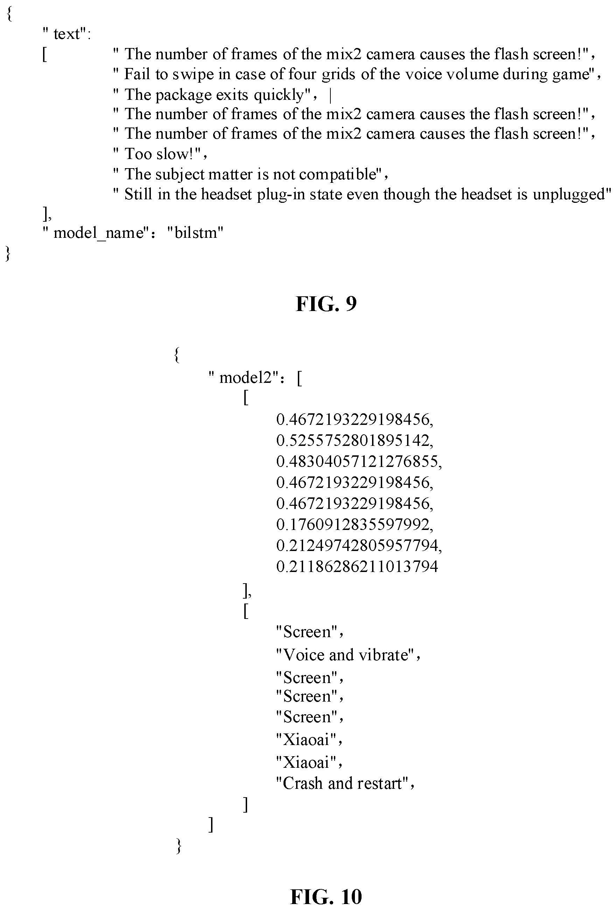

In the embodiments of the present disclosure, after the prediction request of the prediction task triggered by the user is acquired, a prediction object to be classified and text content of the prediction object to be classified that needs to be predicted may be analyzed based on the prediction request. Each prediction object to be classified may be provided with a identifier, and the identifier represents a classification prediction task to which a corresponding prediction object to be classified belongs. The identifier of the classification prediction object may be an instance name, a model name, etc. Based on the identifier, a service branch corresponding to the classification prediction task may be determined in the started uniform classification prediction service; and the classification prediction may be performed based on the service branch. In an example, FIG. 9 shows a user request. The identifier of the prediction object to be classified in the user request is a model name. As can be seen from FIG. 9, the text content input by the user is in the "text" field, and the model name of the request is defined in the model_name field "bilstm". The bilstm may be understood as a branch identifier of a to-be-predicted task; and the service branch bilstm can be found based on the bilstm. For example, the classification prediction service started in the embodiments of the present disclosure may include two service branches shown in FIG. 8, which asre the ernie and the bilstm. Based on the identifier "bilstm" of the prediction object to be classified, it can be found that the corresponding service branch is the bilstm. The service branch bilstm is used to perform classification prediction on the content included in the text in FIG. 9.

FIG. 10 shows a corresponding classification prediction result. In FIG. 10, the output of the predicted result includes two fields, the first field being a probability value predicted by each text, and the second field being an actual name of a classification corresponding to each text.

As described above, in the embodiments of the present disclosure, after the classification prediction service is started and initialized, batch prediction may be performed on a plurality of acquired prediction objects to be classified based on a service branch corresponding to the classification prediction task in the classification prediction service.

In an implementation manner, an input characteristic corresponding to each classification prediction task in the batch processing characteristic may be identified. According to the identifiers respectively corresponding to the plurality of classification prediction tasks, a prediction result respectively corresponding to each classification prediction task can be determined from the prediction result of the batch prediction on the plurality of classification prediction tasks. In the embodiments of the present disclosure, upon the determination of the prediction result, field analysis may be performed on the prediction result, pairing can be performed according to the example, and an http response state and a content can be encapsulated and returned to a user.

According to the method for classification prediction provided by the embodiments of the present disclosure, a uniform classification prediction interface and a self-defined prediction function may be implemented, a high concurrent prediction capacity can be supported, a uniform prediction specification can be provided, high flexibility can be achieved, prediction adaptive capacity can be enhanced for different application scenarios, the conversion of the prediction method can be completed automatically, and the concurrent capacity can be improved.

Based on the same concept, an embodiment of the present disclosure further provides a classification prediction apparatus.

It may be understood that for the purpose of implementing the above functions, the classification prediction apparatus provided by the embodiment of the present disclosure includes a corresponding hardware structure and/or software module for executing various functions. The present disclosure may be implemented by hardware or a combination of hardware and computer software in combination with the units and algorithm operations of the various examples described in the embodiments disclosed herein. Whether a certain function is implemented in the form of hardware or in the form of computer software driving hardware depends on the specific applications and design constraint conditions of the technical solutions. Those skilled in the art may implement the described functions by using different methods for each specific application, but this implementation should not be considered beyond the scope of the present disclosure.

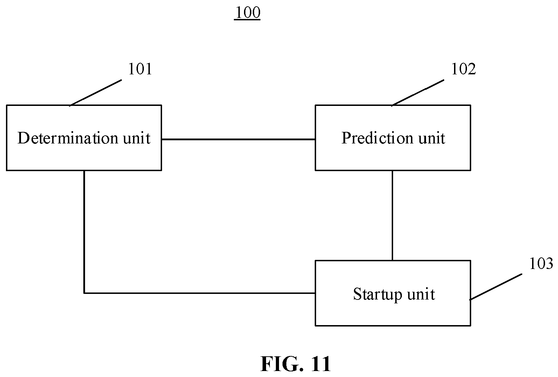

FIG. 11 is a block diagram illustrating a classification prediction apparatus according to an exemplary embodiment. Referring to FIG. 11, the classification prediction apparatus 100 may include a determination unit 101 and a prediction unit 102.

The determination unit 101 is configured to determine a classification prediction task, and determine a service branch corresponding to the classification prediction task from a started classification prediction service according to a branch identifier carried by the classification prediction task. The prediction unit 102 is configured to predict the classification prediction task based on the service branch.

In an implementation manner, the classification prediction task may include a plurality of prediction objects to be classified.

The prediction unit 102 is configured to perform batch prediction on the plurality of prediction objects to be classified based on the service branch.

In another implementation manner, the classification prediction task may include a single prediction object to be classified.

The prediction unit 102 is further configured to: generate an identifier of a single task for each classification prediction task, and add the identifier to a to-be-processed identifier list of a batch prediction task.

The prediction unit 102 is configured to traverse the to-be-processed identifier list to obtain a prediction object to be classified that needs to be processed by a classification prediction task corresponding to each item. The batch prediction may be performed on the plurality of acquired prediction objects to be classified based on the service branch.

In another implementation manner, the prediction unit 102 is further configured to, before performing the batch prediction on the classification prediction task, in response to that a processing capacity of one batch prediction service is not met, acquire task loads of a plurality of classification prediction tasks with a same branch identifier based on the service branch, until no classification prediction task with a same branch identifier exists or a task load of the one batch prediction service is met.

The prediction unit 102 is configured to predict the plurality of prediction objects to be classified based on the service branch by:
acquiring a plurality of prediction objects to be classified that respectively need to be processed by a plurality of same-type classification prediction tasks, wherein each prediction object to be classified is provided with an identifier, and the identifier represents a classification prediction task to which a prediction object to be classified belongs and differentiate the corresponding prediction object to be classified from other prediction objects to be classified in the classification prediction task; and
performing batch prediction on a plurality of acquired prediction objects to be classified based on the service branch.

In still another implementation manner, the determination unit 101 is further configured to: acquire a result of the batch prediction, after the prediction unit 102 performs the batch prediction, and determine, from the result of the batch prediction, a prediction result respectively corresponding to each identifier.

In still another implementation manner, the prediction unit 102 is configured to respectively perform a word segmentation on text contents corresponding to the plurality of prediction objects to be classified, and convert a word segmentation result into an input characteristic supported by a type of the classification prediction task. The prediction unit 102 is configured to splice input characteristics respectively corresponding to the plurality of prediction objects to be classified to obtain a batch processing characteristic, and predict the batch processing characteristic based on the service branch.

In still another implementation manner, the prediction unit 102 is configured to predict the classification prediction task based on the service branch in a manner of: in response to that the service branch is idle, predicting the classification prediction task based on the service branch.

In still another implementation manner, the classification prediction apparatus 100 may further include a startup unit 103. The startup unit 103 is configured to:
read a configuration file, and start the classification prediction service.

The configuration file may include a prediction framework for performing the batch prediction on the classification prediction task. The prediction framework may at least include: a definition of a universal classification prediction interface, and definitions of self-defined classification prediction interfaces respectively corresponding to models supported by the classification prediction service.

In still another implementation manner, the startup unit 103 is configured to read the configuration file and start the classification prediction service by:
initializing a universal variable of each model through the universal classification prediction interface, and performing corresponding startup setting; and initializing a universal batch classification prediction apparatus and a batch task generation apparatus;
initializing a self-defined variable of each model through the self-defined classification prediction interfaces respectively corresponding to the models;
instantiating each model, and starting a branch service for each model; and
generating a model dictionary according to branch identifiers of branch services respectively corresponding to the models, the model dictionary representing a corresponding relationship between branch identifiers and corresponding model invoking interfaces.

In still another implementation manner, the startup unit 103 is configured to generate the model dictionary according to the branch identifiers of the branch services respectively corresponding to the models by:
determining the branch identifiers of the branch services respectively corresponding to the models as primary keys;
based on a definition of each model, determining invoking interfaces for the modes through a dynamic loading mechanism after the models are instantiated; and
storing the primary keys and the invoking interfaces as the model dictionary to a model prediction key value pair.

For the apparatus in the foregoing embodiment, a specific manner of each module in the apparatus performing an operation is already described in the method-related embodiment in detail, and is no longer described herein in detail.

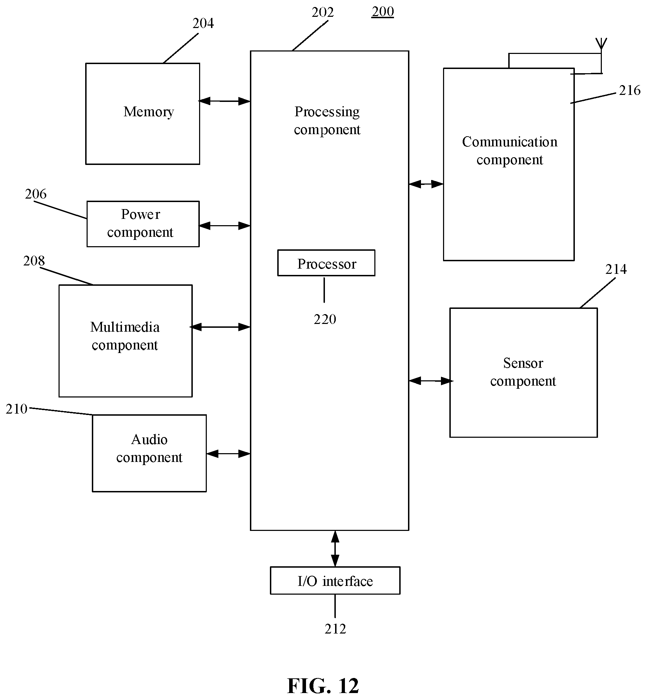

FIG. 12 is a block diagram illustrating an apparatus 200 for classification prediction according to an exemplary embodiment. For example, the apparatus 200 may be a mobile phone, a computer, a digital broadcast terminal, a messaging device, a gaming console, a tablet, a medical device, exercise equipment, a PDA, and the like.

Referring to FIG. 12, the apparatus 200 may include one or more of the following components: a processing component 202, a memory 204, a power component 206, a multimedia component 208, an audio component 210, an input/output (I/O) interface 212, a sensor component 214, and a communication component 216.

The processing component 202 typically controls overall operations of the device 200, such as the operations associated with display, telephone calls, data communications, camera operations, and recording operations. The processing component 202 may include one or more processors 220 to execute instructions to perform all or part of the operations in the above described methods. Moreover, the processing component 202 may include one or more modules which facilitate the interaction between the processing component 202 and other components. For instance, the processing component 202 may include a multimedia module to facilitate the interaction between the multimedia component 208 and the processing component 202.

The memory 204 is configured to store various types of data to support the operation of the apparatus 200. Examples of such data include instructions for any applications or methods operated on the apparatus 200, contact data, phonebook data, messages, pictures, video, etc. The memory 204 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 206 is configured to provide power to various components of the apparatus 200. The power component 206 may include a power management system, one or more power sources, and any other components associated with the generation, management, and distribution of power in the apparatus 200.

The multimedia component 208 includes a screen providing an output interface between the apparatus 200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 208 includes a front camera and/or a rear camera. The front camera and/or the rear camera may receive external multimedia data when the apparatus 200 is in an operation mode, such as a photographing mode or a video mode. Each of the front camera and the rear camera may be a fixed optical lens system or have focus and optical zoom capability.

The audio component 210 is configured to output and/or input audio signals. For example, the audio component 210 includes a microphone (MIC) configured to receive an external audio signal when the apparatus 200 is in an operation mode, such as a call mode, a recording mode, and a voice recognition mode. The received audio signal may further be stored in the memory 204 or transmitted via the communication component 216. In some embodiments, the audio component 210 further includes a speaker configured to output audio signals.

The I/O interface 212 provides an interface between the processing component 202 and peripheral interface modules. The peripheral interface modules may be a keyboard, a click wheel, buttons, and the like. The buttons may include, but are not limited to, a home button, a volume button, a starting button, and a locking button.

The sensor component 214 includes one or more sensors to provide status assessments of various aspects of the apparatus 200. For instance, the sensor component 214 may detect an on/off status of the apparatus 200 and relative positioning of components, such as a display and small keyboard of the apparatus 200, and the sensor component 214 may further detect a change in a position of the apparatus 200 or a component of the apparatus 200, presence or absence of contact between the user and the apparatus 200, orientation or acceleration/deceleration of the apparatus 200 and a change in temperature of the apparatus 200. The sensor component 214 may include a proximity sensor, configured to detect the presence of nearby objects without any physical contact. The sensor component 214 may also include a light sensor, such as a complementary metal-oxide-semiconductor transistor (CMOS) or charge coupled device (CCD) image sensor, for use in imaging applications. In some embodiments, the sensor component 214 may also include an accelerometer sensor, a gyroscope sensor, a magnetic sensor, a pressure sensor, or a temperature sensor.

The communication component 216 is configured to facilitate communication, wired or wirelessly, between the apparatus 200 and other devices. The apparatus 200 may access a communication-standard-based wireless network, such as a Wireless Fidelity (WiFi) network, a 2nd-Generation (2G) or 3rd-Generation (3G) network or a combination thereof. In one exemplary embodiment, the communication component 216 receives a broadcast signal or broadcast associated information from an external broadcast management system via a broadcast channel. In one exemplary embodiment, the communication component 216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 200 may be implemented with one or more application specific integrated circuits (ASIC), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an exemplary embodiment, a non-temporary computer readable storage medium including an instruction is further provided, for example, the memory 204 including the instruction; and the instruction may be executed by the processing component 220 of the device 200 to complete the above method. For example, the non-transitory computer-readable storage medium may be a read only memory (ROM), a random access memory (RAM), a compact disc read-only memory (CD-ROM), a magnetic tape, a floppy disc, an optical data storage device and the like.

It may further be understood that "a plurality of" in the present disclosure refers to more or more than two, and other quantifiers are the same. The "and/or" is an association relationship for describing associated objects and represents that three relationships may exist. For example, A and/or B may represent the following three cases: only A exists, both A and B exist, and only B exists. The character "/" generally indicates that the related objects are in an "or" relationship. "A/an", "said" and "the" in a singular form are also intended to include a plural form, unless other meanings are clearly denoted throughout the present disclosure.

It is further to be understood that, although terms "first", "second" and the like may be adopted to describe various information, the information should not be limited to these terms. These terms are only adopted to distinguish the information of the same type rather than represent a special sequence or an importance. As a matter of fact, the terms "first", "second" and the like may be interchangeable completely. For example, without departing from the scope of the present disclosure, first information may also be called second information and, similarly, second information may also be called first information.

It may further be understood that although the operations are described in a special sequence in the accompanying drawings of the embodiment of the present disclosure, such a description should not be understood as requiring that these operations are executed according to the shown special sequence or serial sequence, or requiring that all shown operations are executed to obtain an expected result. In a special environment, the multi-task processing and the concurrent processing may be favorable.

In some embodiments, the control and/or interface software or app can be provided in a form of a non-transitory computer-readable storage medium having instructions stored thereon is further provided. For example, the non-transitory computer-readable storage medium can be a ROM, a CD-ROM, a magnetic tape, a floppy disk, optical data storage equipment, a flash drive such as a USB drive or an SD card, and the like.

Implementations of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more portions of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium can be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures.

A computer program (also known as a program, software, software application, app, script, or code) can be written in any form of programming language, including compiled or interpreted languages, declarative or procedural languages, and it can be deployed in any form, including as a stand-alone program or as a portion, component, subroutine, object, or other portion suitable for use in a computing environment. A computer program can, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more portions, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors or processing circuits suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), or any other monitor for displaying information to the user and a keyboard, a pointing device, e.g., a mouse, trackball, etc., or a touch screen, touch pad, etc., by which the user can provide input to the computer.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components.

The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

Moreover, although features can be described above as acting in certain combinations and even initially claimed as such, one or more features from a claimed combination can in some cases be excised from the combination, and the claimed combination can be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

As such, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking or parallel processing can be utilized.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Various modifications of, and equivalent acts corresponding to, the disclosed aspects of the example embodiments, in addition to those described above, can be made by a person of ordinary skill in the art, having the benefit of the present disclosure, without departing from the scope of the invention defined in the following claims.

## Claims

1. A computer-implemented method for classification prediction, comprising:
obtaining a classification prediction request (S11), wherein the classification prediction request comprises a branch identifier;
determining (S12) a service branch corresponding to the classification prediction request from a started classification prediction service according to the branch identifier, wherein the started classification prediction service supports models and the service branch is started for one of the models; and
performing a classification prediction task (S13) based on the service branch, wherein the classification prediction task comprises a single prediction object to be classified,
wherein the method further comprises: before performing (S13) the classification prediction task,
generating (S21) an identifier of a single task for each classification prediction task; and
adding (S22) the identifier to a to-be-processed identifier list of a batch prediction task;
wherein performing (S13) the classification prediction task comprises: traversing (S23) the to-be-processed identifier list to obtain a prediction object to be classified that needs to be processed by a classification prediction task corresponding to at least one item; and
performing (S24) batch prediction on a plurality of acquired prediction objects to be classified based on the service branch,
the method further **characterized by** comprising: before performing (S24) the batch prediction,
acquiring, in response to a processing capacity of the service branch being not met, task loads of a plurality of classification prediction tasks with the same branch identifier, until no classification prediction task with the same branch identifier exists or the processing capacity of the service branch is met;
wherein performing (S24) the batch prediction comprises: predicting the plurality of prediction objects to be classified based on the service branch, which comprises:
acquiring the plurality of prediction objects to be classified that respectively need to be processed by the plurality of classification prediction tasks with the same branch identifier; and
performing batch prediction on a plurality of acquired prediction objects to be classified based on the service branch,
wherein performing (S24) the batch prediction on the plurality of prediction objects to be classified based on the service branch comprises:
performing (S31) word segmentation on input text contents respectively corresponding to the plurality of prediction objects to be classified to obtain word segmentation results, and converting each of the word segmentation results into a respective one of input characteristics supported by the model;
splicing (S32) the input characteristics respectively corresponding to the plurality of prediction objects to be classified to obtain a batch processing characteristic; and
predicting (S33) the batch processing characteristic based on the service branch to obtain prediction results, wherein each of the prediction results comprises a first field being a probability value predicted for a respective one of the text contents, and a second field being an actual name of a classification corresponding to the text content; wherein the input text comprises description of a failure on a device and the actual name of the classification comprises a category of the failure.

2. The method of claim 1, further comprising:
acquiring a result of the batch prediction; and
determining, from the result of the batch prediction, the prediction result respectively corresponding to at least one identifier.

3. The method of claim 1, wherein performing the classification prediction task based on the service branch comprises:
performing, in response to the service branch being idle, the classification prediction task based on the service branch.

4. The method of claim 1, further comprising:
reading a configuration file and starting the classification prediction service,
wherein the configuration file comprises a prediction framework for performing batch prediction on the classification prediction task, and
wherein the prediction framework at least comprises: a definition of a universal classification prediction interface, and definitions of self-defined classification prediction interfaces respectively corresponding to the models supported by the classification prediction service.

5. The method of claim 4, further comprising:
Initializing (S41) a universal variable of at least one of the models through the universal classification prediction interface, and performing corresponding startup setting; and initializing (S41) a universal batch classification prediction method and a batch task generation method;
Initializing (S42) a self-defined variable of the at least one model through the self-defined classification prediction interfaces respectively corresponding to the models;
instantiating (S43) the at least one model, and starting a branch service for the at least one model; and
generating (S44) a model dictionary according to branch identifiers of branch services respectively corresponding to the models, the model dictionary representing a corresponding relationship between branch identifiers and corresponding model invoking interfaces.

6. The method of claim 5, wherein generating (S44) the model dictionary according to the branch identifiers of the branch services respectively corresponding to the models comprises:
determining (S441) the branch identifiers of the branch services respectively corresponding to the models as primary keys;
based on a definition of the at least one model, determining (S442) invoking interfaces for the modes through a dynamic loading mechanism after the models are instantiated; and
storing (S443) the primary keys and the invoking interfaces as the model dictionary to a model prediction key value pair.

7. An apparatus for classification prediction, comprising:
a processor (220); and
a memory (204) configured to store instructions executable by the processor,
wherein the processor (220) is configured to call and execute the instructions stored in the memory to perform the method for classification prediction of any one of claims 1 to 6.

8. A non-temporary computer readable storage medium, having stored instructions therein that, when executed by a processor of a computer, cause the computer to implement the method for classification prediction according to any one of claims 1 to 6.

## Patentansprüche

1. Computerimplementiertes Verfahren zur Klassifikationsvorhersage, umfassend:
Erhalten einer Klassifikationsvorhersageanfrage (S11), wobei die Klassifikationsvorhersageanfrage eine Zweigkennung umfasst;
Bestimmen (S12) eines Dienstzweigs, der der Klassifikationsvorhersageanfrage entspricht, aus einem gestarteten Klassifikationsvorhersagedienst gemäß der Zweigkennung, wobei der gestartete Klassifikationsvorhersagedienst Modelle unterstützt und der Dienstzweig für eines der Modelle gestartet wird; und
Durchführen einer Klassifikationsvorhersageaufgabe (S13) basierend auf dem Dienstzweig, wobei die Klassifikationsvorhersageaufgabe ein einzelnes, zu klassifizierendes Vorhersageobjekt umfasst,
wobei das Verfahren ferner umfasst: vor dem Durchführen (S13) der Klassifikationsvorhersageaufgabe,
Erzeugen (S21) einer Kennung einer einzelnen Aufgabe für jede Klassifikationsvorhersageaufgabe; und
Hinzufügen (S22) der Kennung zu einer zu verarbeitenden Kennungsliste einer Stapelvorhersageaufgabe;
wobei das Durchführen (S13) der Klassifikationsvorhersageaufgabe umfasst: Durchlaufen (S23) der zu verarbeitenden Kennungsliste, um ein zu klassifizierendes Vorhersageobjekt zu erhalten, das von einer Klassifikationsvorhersageaufgabe verarbeitet werden muss, die mindestens einem Eintrag entspricht; und
Durchführen (S24) einer Stapelvorhersage für eine Vielzahl von erworbenen, zu klassifizierenden Vorhersageobjekten basierend auf dem Dienstzweig, wobei das Verfahren ferner **dadurch gekennzeichnet ist, dass** es umfasst: vor dem Durchführen (S24) der Stapelvorhersage,
Erwerben, als Reaktion darauf, dass eine Verarbeitungskapazität des Dienstzweigs nicht erfüllt ist, von Aufgabenlasten einer Vielzahl von Klassifikationsvorhersageaufgaben mit derselben Zweigkennung, bis keine Klassifikationsvorhersageaufgabe mit derselben Zweigkennung existiert oder die Verarbeitungskapazität des Dienstzweigs erfüllt ist;
wobei das Durchführen (S24) der Stapelvorhersage umfasst: Vorhersagen der Vielzahl von zu klassifizierenden Vorhersageobjekten basierend auf dem Dienstzweig, das umfasst:
Erwerben der Vielzahl von zu klassifizierenden Vorhersageobjekten, die jeweils von der Vielzahl von Klassifikationsvorhersageaufgaben mit derselben Zweigkennung verarbeitet werden müssen; und
Durchführen einer Stapelvorhersage für eine Vielzahl von erworbenen, zu klassifizierenden Vorhersageobjekten basierend auf dem Dienstzweig,
wobei das Durchführen (S24) der Stapelvorhersage für die Vielzahl von zu klassifizierenden Vorhersageobjekten basierend auf dem Dienstzweig umfasst:
Durchführen (S31) einer Wortsegmentierung an Eingabetextinhalten, die jeweils der Vielzahl von zu klassifizierenden Vorhersageobjekten entsprechen, um Wortsegmentierungsergebnisse zu erhalten, und Umwandeln jedes der Wortsegmentierungsergebnisse in eine jeweilige Eingabecharakteristik, die von dem Modell unterstützt wird;
Verknüpfen (S32) der Eingabecharakteristiken, die jeweils der Vielzahl von zu klassifizierenden Vorhersageobjekten entsprechen, um eine Stapelverarbeitungscharakteristik zu erhalten; und
Vorhersagen (S33) der Stapelverarbeitungscharakteristik basierend auf dem Dienstzweig, um Vorhersageergebnisse zu erhalten, wobei jedes der Vorhersageergebnisse ein erstes Feld, das ein für einen jeweiligen der Textinhalte vorhergesagter Wahrscheinlichkeitswert ist, und ein zweites Feld, das ein tatsächlicher Name einer Klassifikation ist, die dem Textinhalt entspricht, umfasst; wobei der Eingabetext eine Beschreibung eines Fehlers an einem Gerät umfasst und der tatsächliche Name der Klassifikation eine Kategorie des Fehlers umfasst.

2. Verfahren nach Anspruch 1, ferner umfassend:
Erwerben eines Ergebnisses der Stapelvorhersage; und
Bestimmen, aus dem Ergebnis der Stapelvorhersage, des Vorhersageergebnisses, das jeweils mindestens einer Kennung entspricht.

3. Verfahren nach Anspruch 1, wobei das Durchführen der Klassifikationsvorhersageaufgabe basierend auf dem Dienstzweig umfasst:
Durchführen, als Reaktion darauf, dass der Dienstzweig im Leerlauf ist, der Klassifikationsvorhersageaufgabe basierend auf dem Dienstzweig.

4. Verfahren nach Anspruch 1, ferner umfassend:
Lesen einer Konfigurationsdatei und Starten des Klassifikationsvorhersagedienstes,
wobei die Konfigurationsdatei ein Vorhersagerahmenwerk zum Durchführen einer Stapelvorhersage für die Klassifikationsvorhersageaufgabe umfasst, und
wobei das Vorhersagerahmenwerk mindestens umfasst: eine Definition einer universellen Klassifikationsvorhersageschnittstelle und Definitionen von benutzerdefinierten Klassifikationsvorhersageschnittstellen, die jeweils den von dem Klassifikationsvorhersagedienst unterstützten Modellen entsprechen.

5. Verfahren nach Anspruch 4, ferner umfassend:
Initialisieren (S41) einer universellen Variablen von mindestens einem der Modelle über die universelle Klassifikationsvorhersageschnittstelle und Durchführen einer entsprechenden Startkonfiguration; und Initialisieren (S41) einer universellen Stapelklassifikationsvorhersagemethode und einer Stapelaufgabenerzeugungsmethode;
Initialisieren (S42) einer benutzerdefinierten Variablen des mindestens einen Modells über die benutzerdefinierten Klassifikationsvorhersageschnittstellen, die jeweils den Modellen entsprechen;
Instanzieren (S43) des mindestens einen Modells und Starten eines Zweigdienstes für das mindestens eine Modell; und
Erzeugen (S44) eines Modellwörterbuchs gemäß Zweigkennungen von Zweigdiensten, die jeweils den Modellen entsprechen, wobei das Modellwörterbuch eine Entsprechungsbeziehung zwischen Zweigkennungen und entsprechenden Modellaufrufschnittstellen darstellt.

6. Verfahren nach Anspruch 5, wobei das Erzeugen (S44) des Modellwörterbuchs gemäß den Zweigkennungen der Zweigdienste, die jeweils den Modellen entsprechen, umfasst:
Bestimmen (S441) der Zweigkennungen der Zweigdienste, die jeweils den Modellen entsprechen, als Primärschlüssel;
Bestimmen (S442), basierend auf einer Definition des mindestens einen Modells, von Aufrufschnittstellen für die Modelle über einen dynamischen Lade-Mechanismus, nachdem die Modelle instanziiert wurden; und
Speichern (S443) der Primärschlüssel und der Aufrufschnittstellen als das Modellwörterbuch in einem Modellvorhersage-Schlüssel-Wert-Paar.

7. Vorrichtung zur Klassifikationsvorhersage, umfassend:
einen Prozessor (220); und
einen Speicher (204), der konfiguriert ist, um Anweisungen zu speichern, die von dem Prozessor ausführbar sind,
wobei der Prozessor (220) konfiguriert ist, um die im Speicher gespeicherten Anweisungen aufzurufen und auszuführen, um das Verfahren zur Klassifikationsvorhersage nach einem der Ansprüche 1 bis 6 durchzuführen.

8. Nicht-temporäres computerlesbares Speichermedium, auf dem Anweisungen gespeichert sind, die, wenn sie von einem Prozessor eines Computers ausgeführt werden, den Computer veranlassen, das Verfahren zur Klassifikationsvorhersage nach einem der Ansprüche 1 bis 6 zu implementieren.

## Revendications

1. Procédé mis en œuvre par ordinateur pour la prédiction de classification, comprenant :
l'obtention d'une demande de prédiction de classification (S11), dans lequel la demande de prédiction de classification comprend un identifiant de branche ;
la détermination (S12) d'une branche de service correspondant à la demande de prédiction de classification à partir d'un service de prédiction de classification démarré selon l'identifiant de branche, dans lequel le service de prédiction de classification démarré supporte des modèles et la branche de service est démarrée pour l'un des modèles ; et
la réalisation d'une tâche de prédiction de classification (S13) basée sur la branche de service, dans lequel la tâche de prédiction de classification comprend un objet de prédiction unique à classer,
le procédé comprenant en outre : avant la réalisation (S13) de la tâche de prédiction de classification,
la génération (S21) d'un identifiant de tâche unique pour chaque tâche de prédiction de classification ; et
l'ajout (S22) de l'identifiant à une liste d'identifiants à traiter d'une tâche de prédiction par lots ;
dans lequel la réalisation (S13) de la tâche de prédiction de classification comprend : le parcours (S23) de la liste d'identifiants à traiter pour obtenir un objet de prédiction à classer qui doit être traité par une tâche de prédiction de classification correspondant à au moins un élément ; et
la réalisation (S24) d'une prédiction par lots sur une pluralité d'objets de prédiction acquis à classer, basée sur la branche de service, le procédé étant en outre **caractérisé en ce qu'**il comprend : avant la réalisation (S24) de la prédiction par lots,
l'acquisition, en réponse à une capacité de traitement de la branche de service non satisfaite, de charges de tâche d'une pluralité de tâches de prédiction de classification avec le même identifiant de branche, jusqu'à ce qu'il n'existe aucune tâche de prédiction de classification avec le même identifiant de branche ou que la capacité de traitement de la branche de service soit satisfaite ;
dans lequel la réalisation (S24) de la prédiction par lots comprend : la prédiction de la pluralité d'objets de prédiction à classer basée sur la branche de service, qui comprend :
l'acquisition de la pluralité d'objets de prédiction à classer qui doivent respectivement être traités par la pluralité de tâches de prédiction de classification avec le même identifiant de branche ; et
la réalisation d'une prédiction par lots sur une pluralité d'objets de prédiction acquis à classer basée sur la branche de service,
dans lequel la réalisation (S24) de la prédiction par lots sur la pluralité d'objets de prédiction à classer basée sur la branche de service comprend :
la réalisation (S31) d'une segmentation de mots sur des contenus textuels d'entrée correspondant respectivement à la pluralité d'objets de prédiction à classer pour obtenir des résultats de segmentation de mots, et la conversion de chacun des résultats de segmentation de mots en une caractéristique d'entrée respective prise en charge par le modèle ;
le concaténation (S32) des caractéristiques d'entrée correspondant respectivement à la pluralité d'objets de prédiction à classer pour obtenir une caractéristique de traitement par lots ; et
la prédiction (S33) de la caractéristique de traitement par lots basée sur la branche de service pour obtenir des résultats de prédiction, dans lequel chacun des résultats de prédiction comprend un premier champ étant une valeur de probabilité prédite pour un contenu textuel respectif, et un deuxième champ étant un nom réel d'une classification correspondant au contenu textuel ; dans lequel le texte d'entrée comprend une description d'une panne sur un appareil et le nom réel de la classification comprend une catégorie de la panne.

2. Procédé selon la revendication 1, comprenant en outre :
l'acquisition d'un résultat de la prédiction par lots ; et
la détermination, à partir du résultat de la prédiction par lots, du résultat de prédiction correspondant respectivement à au moins un identifiant.

3. Procédé selon la revendication 1, dans lequel la réalisation de la tâche de prédiction de classification basée sur la branche de service comprend :
la réalisation, en réponse au fait que la branche de service est inactive, de la tâche de prédiction de classification basée sur la branche de service.

4. Procédé selon la revendication 1, comprenant en outre :
la lecture d'un fichier de configuration et le démarrage du service de prédiction de classification,
dans lequel le fichier de configuration comprend un cadre de prédiction pour réaliser une prédiction par lots sur la tâche de prédiction de classification, et
dans lequel le cadre de prédiction comprend au moins : une définition d'une interface de prédiction de classification universelle, et des définitions d'interfaces de prédiction de classification personnalisées correspondant respectivement aux modèles pris en charge par le service de prédiction de classification.

5. Procédé selon la revendication 4, comprenant en outre :
l'initialisation (S41) d'une variable universelle d'au moins l'un des modèles par l'intermédiaire de l'interface de prédiction de classification universelle, et la réalisation d'un réglage de démarrage correspondant ; et l'initialisation (S41) d'une méthode de prédiction de classification par lots universelle et d'une méthode de génération de tâche par lots ;
l'initialisation (S42) d'une variable personnalisée de l'au moins un modèle par l'intermédiaire des interfaces de prédiction de classification personnalisées correspondant respectivement aux modèles ;
l'instanciation (S43) de l'au moins un modèle, et le démarrage d'un service de branche pour l'au moins un modèle ; et
la génération (S44) d'un dictionnaire de modèles selon des identifiants de branche de services de branche correspondant respectivement aux modèles, le dictionnaire de modèles représentant une relation de correspondance entre des identifiants de branche et des interfaces d'appel de modèle correspondantes.

6. Procédé selon la revendication 5, dans lequel la génération (S44) du dictionnaire de modèles selon les identifiants de branche des services de branche correspondant respectivement aux modèles comprend :
la détermination (S441) des identifiants de branche des services de branche correspondant respectivement aux modèles en tant que clés primaires ;
la détermination (S442), sur la base d'une définition de l'au moins un modèle, d'interfaces d'appel pour les modèles par un mécanisme de chargement dynamique après l'instanciation des modèles ; et
le stockage (S443) des clés primaires et des interfaces d'appel en tant que dictionnaire de modèles dans une paire clé-valeur de prédiction de modèle.

7. Appareil pour la prédiction de classification, comprenant :
un processeur (220) ; et
une mémoire (204) configurée pour stocker des instructions exécutables par le processeur,
dans lequel le processeur (220) est configuré pour appeler et exécuter les instructions stockées dans la mémoire afin de réaliser le procédé de prédiction de classification selon l'une quelconque des revendications 1 à 6.

8. Support de stockage non temporaire lisible par ordinateur, sur lequel sont stockées des instructions qui, lorsqu'elles sont exécutées par un processeur d'un ordinateur, amènent l'ordinateur à mettre en œuvre le procédé de prédiction de classification selon l'une quelconque des revendications 1 à 6.
